# NEUE EUROPÄISCHE PATENTSCHRIFT

(11) **EP 0 158 188 B2**
(45) Veröffentlichungstag und Bekanntmachung des Hinweises auf die Entscheidung über den Einspruch: **15.11.1995**
(45) Hinweis auf die Patenterteilung: 23.09.1987
(21) Anmeldenummer: 85103327.4
(22) Anmeldetag: 21.03.1985
(51) Int. Cl.: E04B 5/00

(54) **Bauwerksaufbau mit auf der Betondecke verlegten Rohrleitungen**
Building structure with pipes laid on the concrete slab
Structure de bâtiment avec des conduites posées sur la dalle en béton

(30) Priorität: 23.03.1984 DE 3410838
(43) Veröffentlichungstag der Anmeldung: 16.10.1985
(73) Patentinhaber: E. Missel GmbH & Co., D-70374 Stuttgart (DE)
(72) Erfinder: Ruoff-Schäfer, Rudolf, D-7000 Stuttgart 50 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- WO-A-83/02491
- CH-A- 410 560
- DE-A- 1 905 867
- DE-A- 1 921 446
- DE-A- 2 604 363
- DE-A- 3 602 866
- DE-B- 2 803 708
- DE-U- 7 813 433
- DE-U- 8 009 691
- FR-A- 2 216 513

## Beschreibung

Die Erfindung betrifft einen Bauwerksaufbau mit insbesondere auf Rohbetondecken verlegten, Warmwasser führenden Rohrleitungen.

Durch offenkundige vorbenutzung bekannt sind Dämmplattenstreifen aus harzgebundenem und damit steifem Polyester-Fasermaterial und einem Isolierschlauch aus Polyester-Spinnvlies mit aus Polyester bestehender Außenfolie. Die Dämmplattenstreifen sind dabei in dem Isolierschlauch angeordnet, so daß eine Dämmhülse gebildet wird, die aus einer bodenseitig gelegenen Dämmstoffschicht aus harzgebundenem Polyester-Fasermaterial und einer mit der Dämmstoffschicht verklebten, die auf der Dämmstoffschicht aufliegende Rohrleitung umschließenden Hülle aus Polyestervlies mit Außenfolie aus Polyester besteht. Die Dicke der die Rohrleitungen umschließenden Hülle beträgt dabei lediglich einen Bruchteil der Dicke der Dämmstoffschicht, wobei die aus Folienmaterial mit innenliegendem Polyestervlies bestehende Hülle die Unterseite der Dämmstoffschicht vollflächig bedeckt.

Aufgrund bestehender Vorschriften müssen Warmwasser führende Rohrleitungen von Heizungsanlagen gegen Wärmeverluste geschüzt und deshalb isoliert bzw. gedämmt werden. Dazu ist es bekannt und üblich, die Rohre mit im Querschnitt ringförmigen Schläuchen aus Schaumstoff zu ummanteln. Derart ummantelte Rohre weisen dann aufgrund der erforderlichen Dämmdicke einen relativ großen Außendurchmesser auf. Bei Rohrleitungen mit einem Außendurchmesser von ca. 22 mm beträgt bei einer Dämmdicke von beispiesweise 13 mm der Außendurchmesser des wärmegedämmten Rohres etwa 48 mm.

Bei der Verlegung von in dieser Weise gedämmten Rohren auf Rohbetondecken ist der große Außendurchmesser des ummantelten Rohres problematisch, da oberhalb des Rohres noch die Wärme- und Trittschalldämmung des Estrichs angebracht werden muß und sich dabei ein unerwünscht hoher Aufbau ergibt.

Aufgabe der Erfindung ist es, einen Bauwerksaufbau zu schaffen, bei dem unter Einhaltung der bestehenden Wärmedämmvorschriften von Rohrleitungen eine möglichst geringe Bauhöhe erreicht wird.

Gelöst wird diese Aufgabe durch die Merkmale des Patentanspruchs 1.

Der wesentliche Gedanke der Erfindung besteht darin, den Anforderungen an die Dämmung von Wärmeverlusten durch hinsichtlich der Richtung gezielte Isolierung Rechnung zu tragen und im Bauwerksaufbau bereits vorhandene Dämmungen doppelt zu nutzen. So werden im Falle der Isolierung von Rohrleitungen Wärmeverluste zur Rohbetondecke hin durch eine Dämmschicht verhindert, und seitlich und nach oben hin wird die sich anschließende Wärme- und Trittschalldämmung des Estrichs ausgenutzt. Dadurch ergibt sich eine deutlich geringere Bauhöhe, die es ermöglicht, das einwandfrei gedämmte Rohr in der Trittschalldämmung unterhalb des Estrichs unterzubringen und in vorteilhafter Weise die Umhüllung des Rohres in den seitlichen Bereichen und im oberen Bereich mit solcher Festigkeit auszubilden, daß Beschädigungsgefahren weitestgehend ausgeschlossen sind.

Von Vorteil ist auch, daß durch die Erfindung teuerer Dämmstoff eingespart werden kann, da hochwertiger Wärmedammstoff nur dort verwendet wird, wo es auch auf eine hochwertige Dämmung ankommt.

Weitere vorteilhafte Ausgestaltungen der Erfindung sind in den Patentansprüchen angegeben.

In der Zeichnung zeigt:
Fig. 1 eine schematische Querschnittsansicht einer ersten Ausführungsform eines aus Einzelbestandteilen aufgebauten Dämmaterials, wobei die Breite der Dämmstoffschicht nicht erfindung gemäß dargestellt ist,
Fig. 2 eine schematische Schnittansicht eines durch Extrusion hergestellten Dämmaterials, und
Fig. 3 eine Teil-Seitenansicht eines Dämmaterials mit integrierter Wandverstärkung.

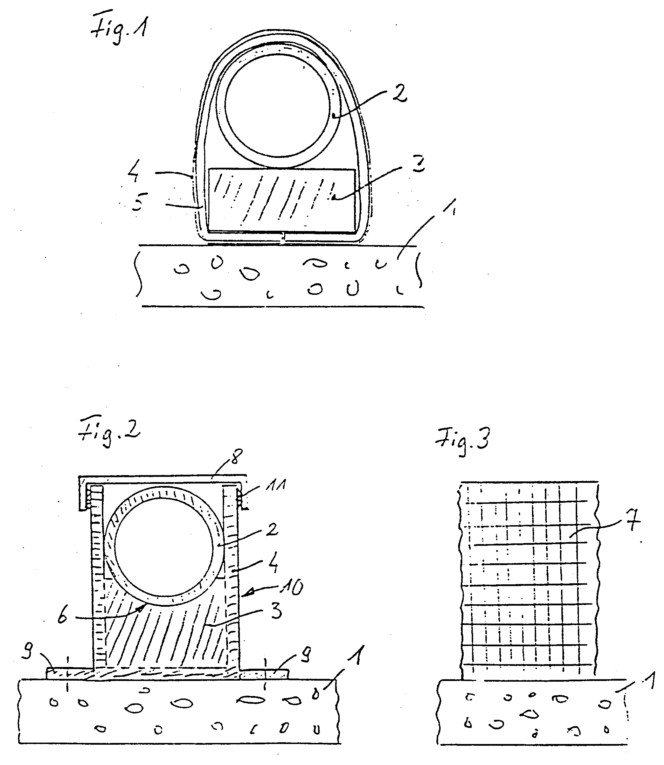

Nach Fig. 1 ist auf einer Rohbetondecke 1 ein Warmwasser führendes Rohr 2 angeordnet. Dieses Rohr 2 ist von einem schlauchförmigen Dämmaterial umgeben, das aus einer streifenförmigen Dämmstoffschicht 3 und einer Hülle 4 sowie einer mit der Innenseite dieser Hülle 4 verbundenen dünnen Schaumstoffschicht 5 besteht.

Die Dämmstoffschicht 3 besteht bevorzugt aus einer einlagigen oder mehrlagigen Schaumstoffschicht, wobei hochwertiger Wärmedämmstoff verwendet sein kann.

Diese Dämmstoffschicht 3 liegt lediglich zwischen dem Rohr 2 und der Rohbetondecke 1 und erfüllt somit die Funktion, Wärmeverluste bezüglich der Rohbetondecke zu verhindern.

Die insbesondere aus einer verstärkten Kunststoffolie bestehende Hülle 4 umschließt Rohr 2 und Dämmschicht 3, so daß sowohl das Rohr 2 als auch die Dämmschicht 3 gegen aggressive Bauchemikalien und auch gegen Feuchtigkeit geschützt sind.

Die dünne Schaumstoffschicht 5, die an der Innenseite der Folienhülle 4 vorgesehen ist, erleichtert die Handhabung des Dämmmaterials, da sie eine gewisse Grundstabilität erbringt, die das Einführen des jeweiligen Rohres in diesen speziell ausgebildeten Dämmschlauch sowie das Gleiten des Rohres im Schlauch erleichtert.

Bevorzugt ist die Hülle 4 mit der Unterseite des Dämmschichtstreifens 3 fest verbunden, insbesondere verklebt, es kann aber auch zusätzlich eine Verklebung mit den Seitenflächen vorgesehen sein.

Des weiteren kann zwischen Hülle 4 und Schaumstoffstreifen 3 oder zwischen zwei Bereichen der Hülle 4 ein Gleit-, Klemm- oder dergleichen Verschluß vorgesehen werden.

Das Dämmaterial nach der Erfindung ermöglicht beispielsweise bei Rohrdurchmessern von etwa 22 mm und einer Dämmdicke von 13 mm eine Reduzierung des Außendurchmessers des gedämmten Rohres auf etwa 37 mm, was für die Integration in die Trittschalldämmung unterhalb des Estrichs von wesentlichem Vorteil ist.

Die Ausführungsform nach Fig. 2 zeigt ein vorzugsweise durch Extrusion gebildetes Dämmaterial mit einer eine leichte Einbuchtung 6 aufweisenden Dämmschicht 3, die wiederum bodenseitig vorgesehen und in einer Hülle 4 angeordnet ist. Diese Hülle 4 wird gleichzeitig mit der Dämmstoffschicht extrudiert und besitzt im Vergleich zur Dämmstoffschicht wesentlich größere Festigkeit und ist wasser- und dampfdicht. An der Unterseite sind Flansche 9 vorgesehen, mittels deren eine Befestigung am Rohbetonboden 2 möglich ist. Diese Befestigungsart vermeidet das bei Einsatz von Spannbügeln häufig eintretende, zu einer Veränderung der Dämmeigenschaften führende Zusammenpressen der Dämmschicht 3.

Das Dämmaterial nach Fig. 2 ist nach Art eines Kabelkanals ausgebildet und kann oberseitig geschlossen oder - wie in Fig. 2 gezeigt - mit einem Deckel 8 versehen sein, der auf die Seitenwände aufschnappbar und über Rastelemente 11 verrastbar ist.

Wenn das Dämmaterial nach Fig. 2 nicht extrudiert wird, kann auch ein mehrteiliger Aufbau vorgesehen sein, wozu dann ein im Querschnitt etwa U-förmiges Gehäuse 10 mit bodenseitigen Flanschen 9, ein in dem Gehäuse angeordneter Dämmschichtstreifen 3 und ein Deckelelement 8 gehören.

Die Seitenansicht nach Fig. 3 zeigt die Integration eines Verstärkungsnetzes 7 in die Außenhülle des Dämmaterials, wodurch Beschädigungen nach erfolger Montage auf dem Bau praktisch ausgeschlossen werden.

## Patentansprüche

1. Bauwerksaufbau,
bestehend aus Rohbetondecke, Estrich und dazwischen liegender Wärme- und Trittschalldämmung,
mit auf der Rohbetondecke verlegten, Warmwasser führenden Rohrleitungen
mit einer bodenseitig gelegenen, einen Träger für die aufliegende Rohrleitung (2) bildenden, wenigstens einlagigen Dämmstoffschicht (3), deren Breite etwa dem Durchmesser des aufzusicherenden Rohres entspricht
und zumindest einer mit dieser Dämmstoffschicht integral ausgebildeten oder zumindest bereichsweise verbundenen Hülle (4)
die die Rohrleitung zumindest im wesentlichen umschließt und deren Dicke lediglich einen Bruchteil der Dicke der Dämmstoffschicht (3) beträgt,
wobei zur Verringerung der Bauhöhe die Wärmedämmung zur Rohbetondecke (1) hin von der aus Schaumstoff bestehenden Dämmstoffschicht (3)
und die Wärmedämmung seitlich und nach oben hin durch die sich anschließende Wärme- und Trittschalldämmung des Estrichs gebildet
und das gedämmte Rohr unter Ausbildung einer im Querschnitt ein wesentlichen rechteckigen Struktur in der Wärme- und Trittschalldämmung unterhalb des Estrichs untergebracht ist.

2. Bauwerksaufbau nach Anspruch 1,
dadurch **gekennzeichnet,**
daß die Hülle (4) aus einem Folienmaterial mit außenseitig integrierter Verstärkung mit Gitter-, Netz- oder Gewebestruktur (7) besteht und an der Innenseite dieser Folienhülle (4) eine dünne Schaumstoffschicht (5) vorgesehen ist.

3. Bauwerksaufbau nach Anspruch 1,
dadurch **gekennzeichnet,**
daß die Hülle (4) an der Unterseite und an den Seitenflächen der Dämmstoffschicht (3) befestigt ist.

4. Bauwerksaufbau nach Anspruch 1,
dadurch **gekennzeichnet,**
daß die Hülle (4) innenseitig mit einer weiteren, im Vergleich zur Dämmstoffschicht (3) dünnen Verstärkungs- und/oder Gleitschicht in Form einer Faserschicht (5) oder einer Doppelschicht aus Fasermaterial und Schaumstoff versehen ist.

5. Bauwerksaufbau nach Anspruch 1,
dadurch **gekennzeichnet,**
daß die Dämmstoffschicht (3) und die Hülle (4) als integraler Extrusionskörper ausgebildet sind, daß die außenliegende Schicht des Extrusionskörpers die Funktion der Hülle (4) übernimmt und im Vergleich zur Dämmstoffschicht (3) mechanisch fester und mit geschlossener Oberfläche ausgeführt ist.

## Claims

1. Construction assembly comprising a rough concrete floor, a floor screed and thermal insulation and footfall sound insulation lying therebetween, hot water conducting pipe conduits laid on the rough concrete floor, at least one insulating material layer (3), the width of which corresponds approximately to the diameter of the pipe conduit to be accommodated, lying at the floor side and forming a carrier for the pipe conduit (2) lying thereon, and at least one sleeve which is integrally formed with this insulating material layer or at least regionally connected thereto, with the sleeve (4) surrounding the pipe conduit at least substantially and with its thickness amounting to only a fraction of the thickness of the insulating material layer (3), wherein, to reduce the constructional height, the thermal insulation towards the rough concrete floor (1) is formed from the insulating material layer (3) consisting of foam material and the thermal insulation to the sides and upwardly is formed by the subsequent thermal insulation and footfall sound insulation of the floor screed and the insulated pipe conduit is accommodated in the thermal insulation and footfall insulation beneath the floor screed while forming a structure which is substantially rectangular in cross-section.

2. Construction assembly in accordance with claim 1, characterised in that the sleeve (4) consists of a foil material with a reinforcement having a grid, net or fabric structure (7) integrated at the outer side and with a thin foam layer (5) provided at the inner side of this foil sleeve (4).

3. Construction assembly in accordance with claim 1, characterised in that the sleeve (4) is secured to the lower side and to the side surfaces of the insulating material layer (3).

4. Construction assembly in accordance with claim 1, characterised in that the sleeve (4) is provided at the inner side with a further reinforcement layer and/or sliding layer which is thin in comparison to the insulating material layer (3) and in the form of a fibre layer (5) or of a double layer of fibre material and foam material.

5. Construction assembly in accordance with claim 1, characterised in that the insulating material layer (3) and the sleeve (4) are formed as integral extrusion bodies; and in that the outer lying layer of the extruded body takes on the function of the sleeve (4) and is made mechanically firmer with a closed surface in comparison to the insulating material layer (3).

## Revendications

1. Elément de construction, comprenant un plancher en béton brut, un revêtement de sol, et un isolant thermique et phonique entre ceux-ci,
comprenant des conduites tubulaires qui mènent de l'eau chaude et sont posées sur le plancher en béton,
comprenant une couche (3) de matière isolante au moins monocouche, posée du côté du sol et formant un support pour les conduites tubulaires (2) posées, la largeur de ladite couche correspondant approximativement au diamètre des tubes à loger,
et comprenant au moins une gaine (4) réalisée de manière intégrée avec cette couche de matière isolante ou tout au moins reliée localement à celle-ci,
ladite gaine entourant au moins sensiblement la conduite tubulaire et son épaisseur s'élevant uniquement à une fraction de l'épaisseur de la couche (3) de matière isolante,
dans lequel, en vue de réduire la hauteur structurelle, l'isolation thermique est formée en direction du plancher en béton (1) par la couche (3) en matière isolante réalisée de matière en mousse,
et l'isolation thermique est formée latéralement et vers le haut par l'isolation thermique et phonique du revêtement qui s'y raccorde,
et le tube isolé est logé dans l'isolation thermique et phonique au-dessous du revêtement, en formant une structure sensiblement rectangulaire en section transversale.

2. Elément de construction selon la revendication 1, caractérisé en ce que la gaine (4) se compose d'une matière sous forme de feuilles avec un renforcement extérieur intégré à structure (7) en grille, en treillis ou en tissage, et en ce qu'il est prévu sur la face intérieure de cette gaine en feuille (4) une couche mince de matière en mousse (5).

3. Elément de construction selon la revendication 1, caractérisé en ce que la gaine (4) est fixée sur la face inférieure et sur les faces latérales de la couche (3) de matière isolante.

4. Elément de construction selon la revendication 1, caractérisé en ce que la gaine (4) est munie intérieurement d'une autre couche de renforcement et/ou de glissement, mince en comparaison de la couche (3) de matière isolante, sous forme d'une couche de fibres (5) ou d'une couche double en matière fibreuse et en mousse.

5. Elément de construction selon la revendication 1, caractérisé en ce que la couche (3) de matière isolante et la gaine (4) sont réalisées sous la forme d'un corps extrudé, et en ce que la couche extérieure du corps extrudé remplit la fonction de la gaine (4) et possède en comparaison de la couche (3) de matière isolante une solidité mécanique plus grande et une surface plus fermée.
